# EUROPÄISCHE PATENTSCHRIFT

(11) **EP 2 508 676 B1**
(45) Veröffentlichungstag und Bekanntmachung des Hinweises auf die Patenterteilung: **01.10.2014**
(21) Anmeldenummer: 12158064.1
(22) Anmeldetag: 05.03.2012
(51) Int. Cl.: E01C 23/088

(54) **Walzengehäuse für eine Arbeitswalze einer Baumaschine oder Abbaumaschine, Baumaschine oder Abbaumaschine, sowie Verfahren zum Überwachen des Zustandes einer Arbeitswalze einer Baumaschine oder Abbaumaschine**
Milling housing for a working drum of a construction machine or excavation machine, construction machine or excavation machine and method for monitoring the condition of a working drum of a construction machine or excavation machine
Caisson pour un cylindre de travail d'un engin de construction ou d'une machine de démontage, engin de construction ou machine de démontage, ainsi que procédé de surveillance de l'état d'un cylindre de travail d'un engin de construction ou d'une machine de démontage

(30) Priorität: 06.04.2011 DE 102011016271
(43) Veröffentlichungstag der Anmeldung: 10.10.2012
(73) Patentinhaber: Wirtgen GmbH, 53578 Windhagen (DE)
(72) Erfinder: von Schönebeck, Winfried, 53560 Vettelschoß (DE); Berges, Jörg, 53773 Hennef (DE); Berghoff, Peter, 53578 Windhagen (DE); Wagner, Stefan, 53604 Bad Honnef (DE); Barimani, Cyrus, 53639 Königswinter (DE); Hähn, Günter, 53639 Königswinter (DE)
(74) Vertreter: Von Kreisler Selting Werner - Partnerschaft von Patentanwälten und Rechtsanwälten mbB

(56) Entgegenhaltungen:
- EP-A2- 1 039 036
- EP-A2- 1 396 581
- US-A- 4 655 634
- US-A1- 2008 153 402

## Beschreibung

Die Erfindung betrifft ein Walzengehäuse für eine mit Werkzeugen versehene, um eine Walzenachse mit einer vorgegebenen Drehrichtung rotierende Arbeitswalze einer Baumaschine oder Abbaumaschine nach dem Oberbegriff des Anspruchs 1, eine Baumaschine oder Abbaumaschine mit einem solchen Walzengehäuse nach dem Oberbegriff des Anspruchs 15, sowie ein Verfahren zum Überwachen des Zustandes einer Arbeitswalze einer Baumaschine/Abbaumaschine oder deren auf dem Umfang der Arbeitswalze angeordneten Werkzeuge durch Messen des Zustandes der Arbeitswalze oder deren Werkzeuge mit einer Überwachungseinrichtung, nach dem Oberbegriff des Anspruchs 16.

Ein derartiges Verfahren ist aus der DE 10 2008 045 470 A1 bekannt. Eine Überwachüngseinrichtung überwacht den Zustand der Werkzeuge einer Straßenfräse durch mindestens eine Inspektionsöffnung in einem die Arbeitswalze umfangsmäßig zumindest teilweise umgebenden Gehäusemantel eines Walzengehäuses.

Die mit Werkzeugen versehene, um eine Walzenachse rotierende Arbeitswalze einer Baumaschine, z. B. eine Fräswalze bei der Bearbeitung von Straßenoberflächen durch Straßenfräsen, sowie zum Abbau von Lagerstätten durch Surface Miner, unterliegt einem kontinuierlichen Verschleißprozess, wobei auch ein Werkzeugbruch auftreten kann. Dies betrifft in der Hauptsache die eingesetzten Werkzeuge und dabei insbesondere die Fräsmeißel, aber auch die Werkzeughalter. Erreichen die Werkzeuge einen bestimmten Verschleißzustand, ist ein Austausch der Werkzeuge zweckmässig, da sonst der weitere Prozess an Effizienz verliert. Dabei müssen verschiedene Verschleißzustände unterschieden werden, die zum Austausch eines Fräsmeißels bzw. Meißelhalters führen:
1. Austausch des Meißels, da nicht mehr genügend Verschleißmaterial, insbesondere Hartmetall in der Spitze, vorhanden ist. Der Eindringwiderstand wird zu groß und damit nimmt der Wirkungsgrad infolge eines zu großen Reibungsverlustes ab. Der Verschleiß ist hauptsächlich rotationssymmetrisch.
2. Austausch des Meißelhalters, da es zwischen Meißel und Halter an der Kontaktfläche zwischen diesen Teilen insbesondere zum Verschleiß des Halters kommt und die Verschleißgrenze erreicht worden ist. Dieser Verschleiß ist üblicherweise symmetrisch.
3. Nicht rotationssymmetrischer Verschleiß der Meißelspitze und/oder des Meißelkopfes durch unzureichende Drehbewegung des Meißels während des Fräsprozesses. Die Folgen sind ein schlechtes Fräsbild sowie die Gefahr eines Werkzeugbruches, da die stützende Wirkung des Meißelkopfes verloren geht.
4. Der Meißelhalter kann darüber hinaus noch zusätzlichem, nicht rotationssymmetrischem Verschleiß unterliegen.
5. Meißelbruch.

Darüber hinaus kann es bei verschlissenen und/oder gebrochenen Meißeln zu Sekundärschäden an den Meißelhaltern beziehungsweise bei verschlissenen Meißelhaltern zu Sekundärschäden an der Fräswalze kommen. Ein rechtzeitiger Austausch der Meißel und/oder der Meißelhalter kann daher notwendig sein und Kosten reduzieren. Werden die Meißel und/oder Meißelhalter hingegen zu früh gewechselt, wird ebenfalls nicht kostenoptimal gearbeitet. Noch vorhandenes Verschleißpotential wird dann nicht richtig ausgenutzt. Zuvor wurde ohne Überwachungseinrichtung der Verschleißzustand der Fräswalze und der Werkzeuge, nämlich der Meißel und Meißelhalter, durch visuelle Kontrolle des Maschinenführers beurteilt. Der Maschinenführer muss dazu die Maschine abstellen (Motor ausschalten und Walze vom Antriebsstrang entkoppeln). Er muss sodann die hintere Walzenklappe öffnen, um so die Fräswalze visuell zu inspizieren.

Die Fräswalze wird dann mittels eines zweiten Antriebes (Hilfsantrieb) gedreht, um die komplette Fräswalze abschnittweise inspizieren zu können. Die Aufgabe der Walzeninspektion kann auch von einer zweiten Bedienungsperson übernommen werden. Der Verschleißzustand der Meißelhalter wird dabei üblicherweise über sogenannte Verschleißmarkierungen, der Verschleißzustand der Meißel über Längenverschleiß und Rotationssymmetrie des Verschleißbildes beurteilt.

Die Kontrolle des Verschleißzustandes von Meißel und Halter ist sehr zeitaufwändig und verringert die Betriebszeit der Maschine. Zudem besteht die Gefahr aufgrund der stark subjektiv geprägten Beurteilung, dass der Verschleißzustand von Halter und Meißel nicht richtig beurteilt wird und daher das Verschleißpotential nicht optimal genutzt wird.

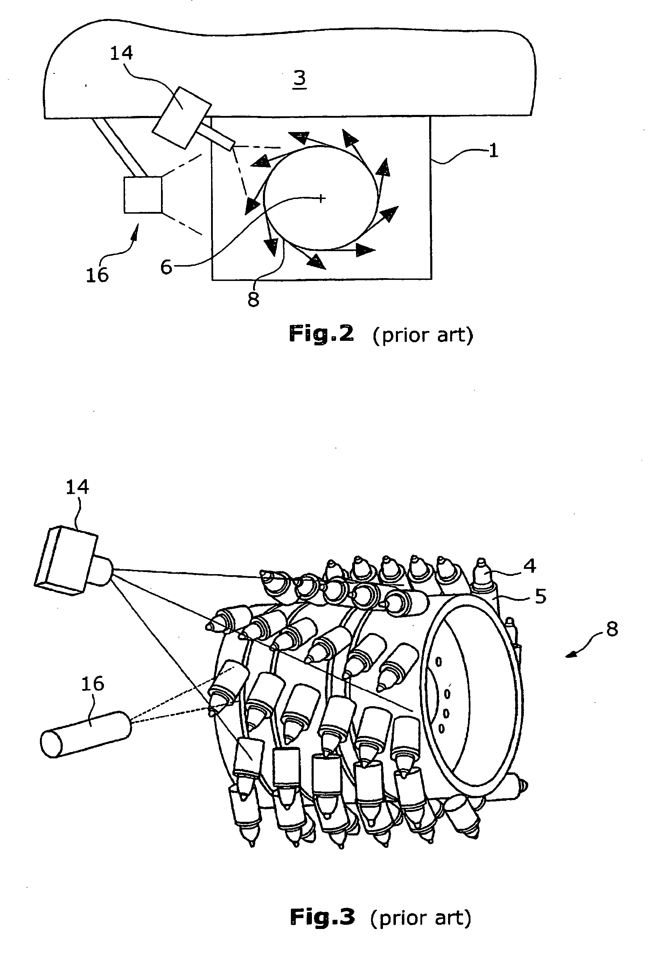

Nach dem aus Fig. 2 ersichtlichen bekannten Stand der Technik wird ein Tubus der Inspektionskamera der Überwachungseinrichtung durch eine Inspektionsöffnung im Gehäusemantel des Walzenkastens in das Innere des Walzengehäuses geführt. Desweiteren ist vorgesehen, dass die Überwachungseinrichtung während des Fräsprozesses in einer Schutzvorrichtung verstaut wird. Der Tubus in dem Walzengehäuse unterliegt durch das umlaufende Fräsgut einem hohen Verschleiß und kann durch größere Bruchstücke des Fräsgutes stark beschädigt werden. Auch ist eine Beschädigung der Optik der Kamera durch den Tubus hindurch nicht ausgeschlossen, falls die Kamera in Fräsbetrieb nicht demontiert wird. Der Austausch beschädigter Teile ist zeitaufwändig. Außerdem fallen durch das Verstauen bzw. Befestigen der Überwachungseinrichtung Montagezeiten an.

Aus der EP 1 039 036 A ist eine Einrichtung zum Vermeiden der Verstopfung von in dem Walzengehäuse vorgesehenen Düsenöffnungen bekannt. In diesen Düsenöffnungen können alternativ eine Düse oder ein Stopfen hineingefahren werden, wobei die Stopfen dazu dienen, die Düsenöffnungen freizuhalten, wenn keine Flüssigkeit in das Walzengehäuse eingespritzt werden soll. Es versteht sich dabei, dass die Stopfen während des Betriebes der Maschine eingesetzt sind und die Aufgabe haben, ein Verstopfen der Düsenöffnungen zu vermeiden.

Aus der US 2008/153402 A ist ein Ultraschallsensor bekannt, das fest in einem Haubensegment 56 befestigt ist.

Der Erfindung liegt daher die Aufgabe zugrunde, ein Walzengehäuse, eine Baumaschine oder Abbaumaschine und ein Verfahren zum Überwachen des Zustan - des einer Arbeitswalze zu schaffen, bei denen eine Überwachungseinrichtung jederzeit ohne Montageaufwand einsetzbar ist und eine Zeitersparnis bei der Inspektion von Arbeitswalzen ermöglicht.

Zur Lösung dienen die Merkmale des Anspruchs 1, 15 bzw. 16.

Die Erfindung sieht ein Walzengehäuse für eine mit Werkzeugen versehene, um eine Walzenachse rotierende Arbeitswalze einer Baumaschine oder Abbaumaschine, mit einem Gehäusemantel, der die Arbeitswalze umfangsmäßig zumindest teilweise umgibt, vor. Der Gehäusemantel hat mindestens eine in dem Gehäusemantel angeordnete Inspektionsöffnung für eine Überwachungseinrichtung, die den Zustand der Arbeitswalze oder deren Werkzeuge inspiziert. Auf der Außenseite des Gehäusemantels ist eine Schließeinrichtung angeordnet, mit der die mindestens eine Inspektionsöffnung verschließbar ist.

Die Erfindung ermöglicht es in vorteilhafter Weise zur Inspektion des Zustandes der Arbeitswalze oder deren Werkzeuge, eine oder mehrere Inspektionsöffnungen im Walzengehäuse für eine Inspektion zu öffnen oder während des Arbeitsbetriebes zu schließen. Im Öffnungszustand der mindestens einen Inspektionsöffnung können mit Hilfe der Überwachungseinrichtung Inspektionen durchgeführt werden. Die Überwachungseinrichtung, (z.B. mindestens eine Inspektionskamera und vorzugsweise mindestens eine Lichtquelle, oder ein Ultraschallsensor oder ein Scanner, z. B. ein Laserscanner, oder eine Kamera ohne zusätzliche Lichtquelle) kann in ihrem Einbauzustand verbleiben und muss nicht während des Fräsbetriebes demontiert sein. Dadurch, dass nichts in das Walzengehäuse hineinragt, kann auch nichts beschädigt werden. Es ist möglich, vor der Inspektion die Arbeitswalze z.B. mit Wasser zu reinigen, um die Inspektion noch effektiver an einer von Schmutz befreiten Arbeitswalze oder deren Werkzeugen durchführen zu können. Zur Durchführung der Inspektion wird die Schließeinrichtung in ihre Öffnungsposition bewegt, so dass die mindestens eine Inspektionsöffnung für einen Strahlengang der Überwachungseinrichtung freigegeben wird. Nach Abschluss der Inspektion kann die mindestens eine Inspektionsöffnung durch Betätigen der Schließeinrichtung wieder verschlossen werden, so dass sofort anschließend der Fräsbetrieb wieder aufgenommen werden kann, wenn die Inspektion nicht die Notwendigkeit eines Werkzeugwechsels ergeben hat.

Vorzugsweise ist vorgesehen, dass sich die mindestens eine Inspektionsöffnung in dem Gehäusemantel in Längsrichtung der Arbeitswalze erstreckt. Auf diese Weise kann die Inspektionskamera die Arbeitswalze linienförmig in Längsrichtung der Arbeitswalze abtasten. Entsprechend kann auch die Lichtquelle, sofern eine solche benötigt wird, die Arbeitswalze linienförmig beleuchten, wobei die Lichtquelle auf den Meßbereich der Inspektionskamera gerichtet ist. Beispielsweise kann sich die mindestens eine Inspektionsöffnung parallel zur Walzenachse erstrecken.

Bei einem bevorzugten Ausführungsbeispiel ist vorgesehen, dass die mindestens eine Inspektionsöffnung sich radial in Richtung auf die Arbeitswalze verjüngt. Eine solche Gestaltung der Inspektionsöffnung vereinfacht das Verschließen und Öffnen, weil sich keine Teile der Schließeinrichtung in den Öffnungen verkanten können.

Die Überwachungseinrichtung weist mindestens eine Sensoreinrichtung, z.B. eine Inspektionskamera und vorzugsweise eine Beleuchtungseinrichtung auf, wobei die mindestens eine Inspektionsöffnung mindestens eine erste Öffnung für die Sensoreinrichtung und ggf. mindestens eine zweite Öffnung für die Beleuchtungseinrichtung aufweisen kann.

Die Schließeinrichtung kann jeweils ein der Inspektionsöffnung komplimentär angepasstes Einsatzelement aufweisen, das zum Schließen der Inspektionsöffnung in die Inspektionsöffnung eingreift. Das komplimentär angepasste Einsatzelement hat den Vorteil, die Inspektionsöffnung vollständig zu verschließen. Dabei schließt das Einsatzelement die Inspektionsöffnung formschlüssig und derart dicht ab, dass nahezu kein Fräsgut während des Fräsbetriebes durch die Inspektionsöffnung des Walzengehäuses dringen kann. Zur Innenseite des Walzengehäuses schließt das Einsatzelement vorzugsweise bündig ab. Das Einsatzelement kann auch zur Innenseite des Walzengehäuses eine Verschleißplatte oder Verschleißschicht aufweisen, um einem Verschleiß des Einsatzelementes vorzubeugen.

Ein oder mehrere Einsatzelemente können auf einer Stützplatte oder alle Einsatzelemente auf einer gemeinsamen Stützplatte angeordnet sein, wobei die mindestens eine Stützplatte zum Öffnen oder Verschließen der mindestens einen Inspektionsöffnung in eine Öffnungsstellung oder in eine Schließstellung versetzbar ist. Mit Versetzen kann jede Bewegung, z.B. Verschwenken, Verschieben, Drehen, oder eine Kombination davon verstanden werden.

Die Stützplatte kann mindestens eine einer Inspektionsöffnung angepasste Durchlassöffnung aufweisen, die in der Öffnungsstellung der Schließeinrichtung den Durchgang von Licht- und/oder Meßstrahlen der Überwachungseinrichtung durch die mindestens eine Durchlassöffnung der Stützplatte und die mindestens eine Inspektionsöffnung im Gehäusemantel zulässt. In diesen Fall überdecken sich die Durchlassöffnung der Stützplatte und die mindestens eine Inspektionsöffnung zumindest teilweise. Auf diese Weise kann der erforderliche Bewegungshub der Stützplatte reduziert werden.

Das mindestens eine Einsatzelement kann in der Schließstellung der Schließeinrichtung radial nach außen abgestützt sein. Auf diese Weise kann der durch das im Walzengehäuse rotierende Fräsgut entstehende Druck auf das Einsatzelement sicher gehalten werden. Das Einsatzelement kann entweder unmittelbar radial nach außen abgestützt sein oder auf einer Stützplatte befestigt sein, die ihrerseits radial nach außen abgestützt ist.

Die Schließeinrichtung kann eine Verriegelungseinrichtung aufweisen, wobei die mindestens eine Stützplatte in der Schließstellung der Schließeinrichtung in Radialrichtung mit der Verriegelungseinrichtung verriegelbar ist. Die Verriegelungseinrichtung hat den Vorteil, dass in der Verriegelungsstellung die radial nach au-βen wirkenden Kräfte auf die Stützplatte am Walzengehäuse abgestützt werden und dadurch nicht auf andere Elemente der Schließeinrichtung, z.B. auf Antriebselemente einwirken können.

Die Schließeinrichtung kann eine erste Antriebseinrichtung und optional eine zweite Antriebseinrichtung aufweisen, wobei die erste Antriebseinrichtung das mindestens eine Einsatzelement zwischen der Schließ- und Öffnungsstellung auf der Außenseite des Gehäusemantels versetzt und die zweite Antriebseinrichtung die Verriegelungseinrichtung betätigt. Die Antriebseinrichtungen z.B. Kolben-Zylindereinheiten, können vom Fahrerstand aus bedient werden, so dass das Öffnen oder Schließen der Inspektionsöffnungen vollautomatisch vom Fahrerstand der Baumaschine erfolgen kann.

Die erste Antriebseinrichtung kann bei Bewegung in Schließrichtung das von der Stützplatte getragene mindestens eine Einsatzelement mit Hilfe mindestens eines an dem Gehäusemantel befestigten keilförmigen Anschlags und einer der Keilform des Anschlags angepassten Stirnkante am in Bewegungsrichtung vorderen Ende der Stützplatte in die mindestens eine Inspektionsöffnung drücken.

Das mindestens eine Einsatzelement und die zugehörige Inspektionsöffnung weisen derart aneinander angepasste, geneigte Flanken auf, dass die erste Antriebseinrichtung bei Bewegung in Öffnungsrichtung das mindestens eine Einsatzelement aus der mindestens einen Inspektionsöffnung herausbringt. Dabei können die einander angepassten Flanken aufeinander gleiten.

Mehrere Inspektionsöffnungen und zugehörige Schließeinrichtungen können über die Breite der Arbeitswalze nebeneinander angeordnet sein. Dies ist insbesondere vorteilhaft bei breiten Arbeitswalzen einer Arbeitsbreite, z.B. von mehr als einem halben Meter Länge.

Die Verriegelungseinrichtung weist mindestens eine sich am Walzengehäuse abstützende Einrichtung auf, die in der Schließstellung der Schließeinrichtung die mindestens eine Stützplatte in deren Schließstellung formschlüssig radial nach außen abstützt und in der Öffnungsstellung der Schließeinrichtung die mindestens eine Stützplatte zum Fortbewegen freigibt.

Die mindestens eine Inspektionsöffnung kann zwei sich in Längsrichtung der Arbeitswalze erstreckende Öffnungskanten aufweisen, von denen zumindest die in Drehrichtung der Arbeitswalze erste Öffnungskante eine Prallleiste aufweisen kann. Die Prallleiste hat die Aufgabe das während des Fräsbetriebs umlaufende Fräsgut geringfügig abzulenken, damit die Inspektionsöffnung und das darin befindliche Einsatzelement nicht so stark abrasiv in Anspruch genommen werden. Die Erfindung ist beispielsweise für Straßenbaumaschinen oder Recycler oder Stabilisierer oder Surface-Miner oder generell gesagt für Baumaschinen oder Abbaumaschinen mit Arbeitswalzen verwendbar, deren Zustand, einschließlich des Zustandes der Werkzeuge inspiziert werden soll.

Die Erfindung sieht auch ein Verfahren zum Überwachen des Zustandes einer Arbeitswalze einer Baumaschine bzw. Abbaumaschine oder deren auf dem Umfang der Arbeitswalze angeordneten Werkzeuge vor. Der Zustand der Arbeitswalze oder deren Werkzeuge wird mit einer Überwachungseinrichtung durch mindestens eine Inspektionsöffnung in einem die Arbeitswalze umfangsmäßig zumindest teilweise umgebenden Gehäusemantel eines Walzengehäuses hindurch gemessen. Die mindestens eine Inspektionsöffnung wird während des Arbeitsbetriebes der Arbeitswalze verschlossen oder während der Dauer der Inspektion, nämlich während der Zustandsmessung unter Unterbrechung des Arbeitsbetriebes, in dem die Arbeitswalze nicht im Eingriff mit einer zu bearbeitenden Fläche ist, geöffnet wird. Die Inspektionsöffnung wird im Schließzustand mit mindestens einem zu der Inspektionsöffnung komplementären Einsatzelement verschlossen, das formschlüssig in der Schließstellung verriegelt wird.

Dabei erfolgt das Schließen oder Öffnen der mindestens einen Inspektionsöffnung mit Hilfe von Antriebseinrichtungen, die vom Fahrerstand der Baumaschine bzw. Abbaumaschine aus fernbedienbar sind.

Im Folgenden wird unter Bezugnahme auf die Zeichnungen ein Ausführungsbeispiel der Erfindung näher erläutert.

Es zeigen:
- Fig. 1: ein Beispiel einer Baumaschine in Form einer Straßenfräsmaschine,
- Fig. 2: ein Walzengehäuse mit Überwachungseinrichtung nach dem Stand der Technik,
- Fig. 3: die auf die Arbeitswalze gerichtete Überwachungseinrichtung,
- Fig. 4a: eine Draufsicht auf den Gehäusemantel des Walzengehäuses mit einer Schließeinrichtung in Schließstellung und
- Fig. 4b: einer Schließeinrichtung in Öffnungsstellung,
- Fig. 5a: einen Querschnitt durch die Inspektionsöffnungen im Gehäusemantel in Schließstellung der Schließeinrichtung,
- Fig. 5b: einen Querschnitt gemäß Fig. 5a in Öffnungsstellungstellung der Schließeinrichtung, und
- Fig. 6a: eine Seitenansicht auf die Schließeinrichtung in Umfangsrichtung des Walzengehäuses in Schließstellung, und
- Fig. 6b: eine Seitenansicht auf die Schließeinrichtung in Umfangsrichtung des Walzengehäuses in Öffnungsstellung.

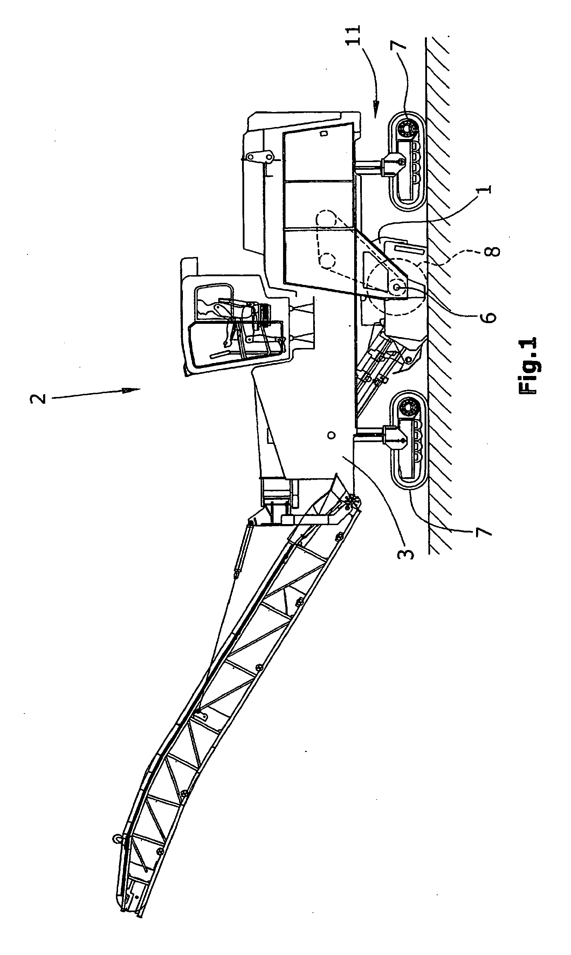

Fig. 1 zeigt ein Beispiel einer Baumaschine 2 in Form einer Straßenfräsmaschine zum Fräsen von Boden- oder Verkehrsflächen. Die Straßenfräsmaschine weist ein Fahrwerk mit beispielsweise vier Kettenlaufwerken 7 auf, das den Maschinenrahmen 3 der Straßenfräsmaschine trägt. Es versteht sich, dass die Kettenlaufwerke 7 durch Räderlaufwerke ganz oder teilweise substituiert werden können. In dem Maschinenrahmen 3 ist eine um eine Walzenachse 6 rotierende Arbeitswalze 8 in Form einer mit Werkzeugen 4 bestückten Fräswalze gelagert, die sich quer zur Fahrtrichtung der Baumaschine 2 erstreckt. Die Arbeitswalze 8 ist von einem Walzengehäuse 1 teilweise umgeben. Die Einstellung der Frästiefe erfolgt vorzugsweise mit Hilfe der Höhenverstellung der Kettenlaufwerke 7 über Hubsäulen 11, kann aber auch durch eine höhenverstellbare Arbeitswalze 8 in einem höhenverstellbaren Walzengehäuse 1 erfolgen.

Es versteht sich, dass die Baumaschine 2 mit einer Arbeitswalze 8 und einem Walzengehäuse 1 auch aus anderen Maschinen bestehen kann, wie beispielsweise Bodenstabilisierer, Kaltrecycler, Recyclingmaschinen, Surface Miner.

Fig. 2 zeigt eine Überwachungseinrichtung aus der DE 10 2008 45 470 an einem Walzengehäuse 1 mit einer Sensoreinrichtung 14, z. B. einer Inspektionskamera, und einer Lichtquelle 16. Die Inspektionskamera 14 ragt mit einem Tubus durch das Walzengehäuse 1 in den die Arbeitswalze 8 umgebenden Mischraum innerhalb des Walzengehäuses 1.

Fig. 3 zeigt die mit Werkzeugen 4 bestückte Arbeitswalze 8 aus der DE 10 2008 045 470, wobei die auswechselbaren Werkzeuge 4 in Werkzeughaltern 5 befestigt sind. Schematisch ist die Anordnung der Inspektionskamera 14 und der Beleuchtungseinrichtung 16 gezeigt. Es versteht sich, dass die Beleuchtungseinrichtung 16 die zu inspizierende Arbeitswalze 8 bzw. deren Werkzeuge 4 und Werkzeughalter 5 in dem Bereich beleuchtet, in dem die Sensoreinrichtung 14 in Form einer Inspektionskamera die zu überwachenden Gegenstände erfasst. Auf die Beleuchtungseinrichtung 16 kann verzichtet werden, wenn ausreichend Licht für die Zustandsüberwachung (Inspektion) vorliegt. Die Überwachungseinrichtung kann alternativ z.B. aus einem Ultraschallsensor oder z.B. aus einem Scanner, vorzugsweise aus einem Laserscanner bestehen.

Hinsichtlich eines durchführbaren Inspektionsverfahrens wird vollinhaltlich auf die DE 10 2008 045 470 verwiesen, deren Offenbarungsinhalt hiermit einbezogen ist.

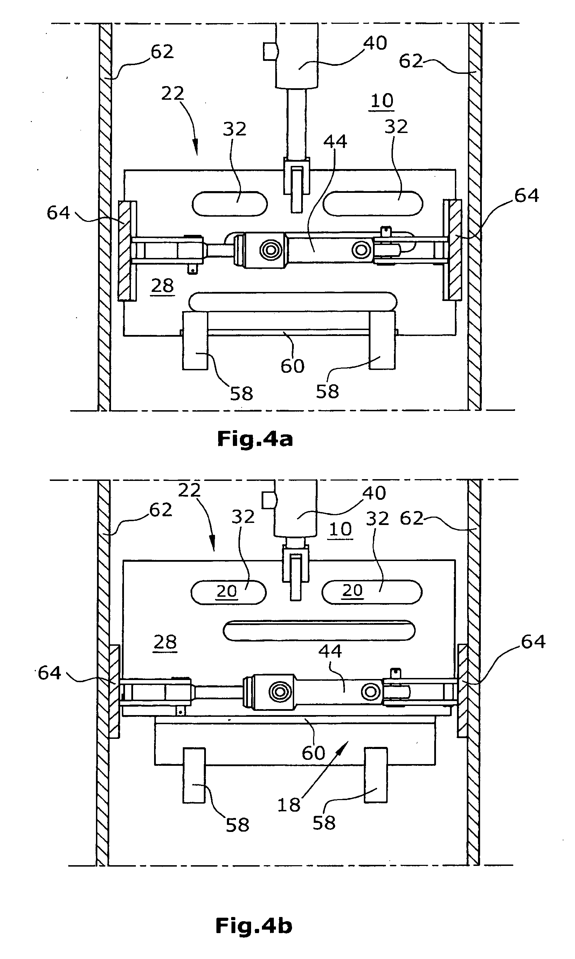

Die Fign. 4a, 4b zeigen eine Draufsicht auf den Gehäusemantel 10 des Walzengehäuses 1, der die Arbeitswalze 8 umfangsmäßig umgibt.

In dem Gehäusemantel 10 sind in Fig. 4b ersichtliche Inspektionsöffnungen 18,20 vorgesehen, die Mess- bzw. Lichtstrahlen 15 der Überwachungseinrichtung 14, 16 während der Inspektion der Arbeitswalze 8 und deren Werkzeuge 4 und Werkzeughalter 5 hindurch zulassen sollen. Auf der in Fig. 4a ersichtlichen Außenseite des Gehäusemantels 10 ist eine Schließeinrichtung 22 angeordnet, mit der die Inspektionsöffnungen 18,20 verschließbar ist. Wenn die Arbeitsbreite der Arbeitswalze 8 sehr groß ist, zum Beispiel 2,50 Meter und mehr, können mehrere Überwachungseinrichtungen 14, 16 in Längsrichtung der Arbeitswalze 8 hintereinander angeordnet sein. Fig. 4a zeigt die Schließeinrichtung 22 im geschlossenen Zustand und in Fig. 4b in geöffneten Zustand.

Die Schließeinrichtung 22 weist eine erste Antriebseinrichtung 40 auf, die auf dem Umfang des Gehäusemantels 10 in Umfangsrichtung und quer zur Walzenachse 6 eine Stützplatte 28 von einer Schließstellung, wie sie in Figur 4a der Arbeitswalze 8 dargestellt ist, in eine Öffnungsstellung, wie sie in der Figur 4b gezeigt ist, bringen kann. Beispielsweise besteht die erste Antriebseinrichtung 40 aus einer Kolbenzylindereinheit.

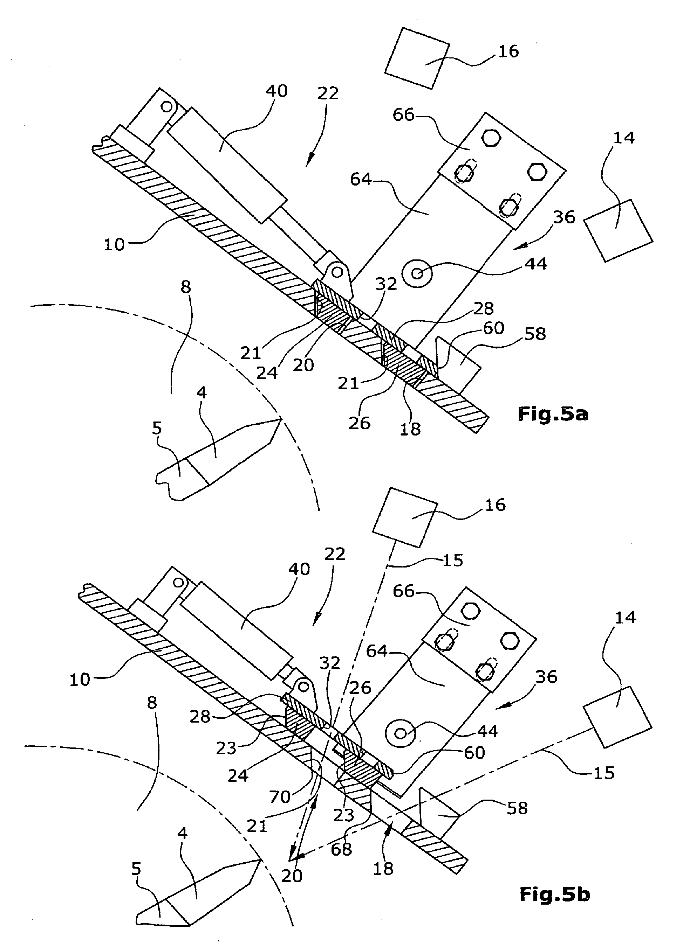

An der Unterseite der Stützplatten 28 sind Einsatzelemente 24, 26 befestigt, die, wie am besten aus den Fign. 5a und 5b ersichtlich, in die Inspektionsöffnungen 18,20 in dem Gehäusemantel 10 vorzugsweise formschlüssig eingreifen können. Die Stützplatten 28 sind seitlich geführt, so dass sie ohne Verkanten von der Schließstellung in die Öffnungsstellung und umgekehrt überführt werden können.

Bei der Bewegung in die Schließstellung wird die Stützplatte 28 ausgehend von der Stellung in der Fig. 4a in die Stellung, wie sie in der Fig. 4b dargestellt ist, verschoben. Am Ende des Verfahrweges der ersten Antriebseinrichtung 40 stößt die in Bewegungsrichtung vordere Stirnkante 60 der Stützplatte 28 gegen zwei mit Abstand voneinander angeordneten keilförmigen Anschlägen 58, deren Keilform die Stützplatte 28 mit den daran befestigten Einsatzelementen 24, 26 radial nach innen drückt, so dass die Einsatzelemente 24, 26 in die zugehörigen Inspektionsöffnungen 18,20 heruntergedrückt werden. Hierzu kann die Stirnkante 60 der Stützplatte 28 eine der Keilform der Anschläge 58 angepasste Schräge aufweisen. Die Lage der Stützplatte 28 mit den Einsatzelementen 24 und 26 im Schließzustand ist am besten der Fig. 5a zu entnehmen.

Sollen die verschlossenen Inspektionsöffnungen 18,20 für eine Inspektion freigegeben werden, wird die Schließeinrichtung 22 in Gegenrichtung bewegt, in dem die Antriebseinrichtung 40 die Stützplatte 28 zu sich hinbewegt. Die Inspektionsöffnungen, nämlich die erste Öffnung 18 für die Sensoreinrichtung 14 und die zweite Öffnung 20 für die Lichtquelle 16, weisen auf der den Anschlägen 58 abgewandten Seite jeweils Schrägflächen 21 auf, die beispielsweise unter einem Winkel von 45 Grad zur Oberfläche des Gehäusemantels 10 verlaufen. Die Einsatzelemente 24, 26, weisen dazu komplementäre Schrägflächen 23 auf, so dass wenn die erste Antriebseinrichtung eine Zugkraft auf die Stützplatte 28 ausübt, die Schrägflächen 23 auf den Schrägflächen 21 gleiten und damit die Stützplatte anheben und dabei gleichzeitig in ihre Öffnungsstellung überführen.

In der in Fig. 5b ersichtlichen Endposition in der Öffnungsstellung sind die Inspektionsöffnungen, d. h. im Einzelnen die Inspektionsöffnungen 18 und 20, freigegeben, so dass die Inspektionskamera 14 die Arbeitswalze 8 oder deren Werkzeuge 4 bzw. Werkzeughalter 5 durch die Inspektionsöffnung 18 inspizieren kann. Durch die Inspektionsöffnung 20 kann eine Lichtquelle die zu untersuchenden Objekte beleuchten. Um die Lichtdurchlässigkeit zu gewährleisten, weist die Stützplatte mindestens eine Öffnung 32 auf, die der Inspektionsöffnung 20 angepasst ist.

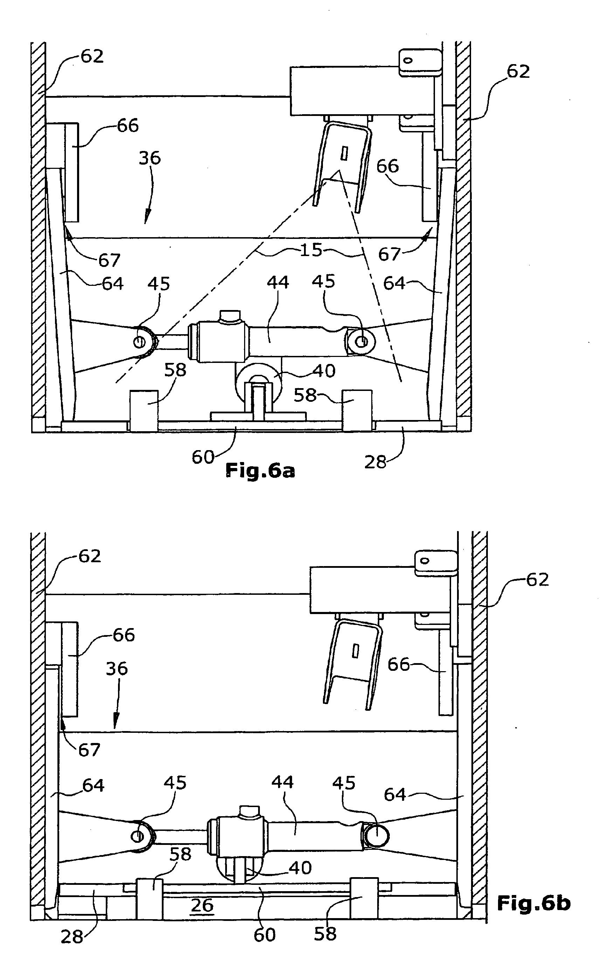

Die Schließeinrichtung 22 kann zusätzlich eine Verriegelungseinrichtung 36 aufweisen, die insbesondere aus den Fign. 4a, 4b, 6a und 6b ersichtlich ist.

Fign. 6a, 6b zeigen ähnlich wie die Fign. 4a, 4b die Verriegelungsvorrichtung 36 in verriegeltem Zustand und in einem Zustand, in dem die Stützplatte 28 freigegeben ist. Die Verriegelungseinrichtung 36 weist eine zweite Antriebseinrichtung 44 auf, die quer, im Ausführungsbeispiel orthogonal zur ersten Antriebseinrichtung 40 verläuft. Die Verriegelungseinrichtung 36 bewirkt, dass die Stützplatte 28 in der Schließstellung der Schließeinrichtung 22 in Radialrichtung verriegelbar ist.

Die Verriegelungseinrichtung 36 weist zwei plattenförmige, sich am Walzengehäuse 1 abstützende Einrichtungen 64 auf, die in der Verriegelungsstellung auf der Stützplatte 28 mit einem freien Ende aufliegen, während das andere Ende sich in einer dem Walzengehäuse 1 befestigten Halterung 66 in einer Tasche 67 abstützt. Die plattenförmigen Einrichtungen sind jeweils über ein Gelenk 45 mit der zweiten Antriebseinrichtung 44 verbunden.

Das Walzengehäuse 1 weist hierzu von dem Gehäusemantel 10 orthogonal abstehende Schottenwände 62 auf, die unter anderem auch zur Versteifung des Walzengehäuses 1 dienen. Das Walzengehäuse 1 hat des weiteren stirnseitige Außenwände. Wie am besten den Figuren 6a und 6b entnehmbar ist, sind Halterungen 66 an den Schottenwänden 62 bzw. an den Außenwänden befestigt, die eine Tasche 67 bilden, in der die plattenförmige Einrichtung 64 mit einem Ende aufgenommen ist. Die plattenförmige Einrichtung 64 ist gelenkig in der Tasche 67 gelagert und kann um einen kleinen Winkel mit Hilfe der zweiten Antriebseinrichtung 44 verschwenkt werden. In der in Figur 6b dargestellten Freigabeposition liegt die plattenförmige Einrichtung 64 auf beiden Seiten an einer Schottenwand 62 bzw. an einer stirnseitigen Außenwand an, indem die zweite Antriebseinrichtung 44 in ihre Streckposition überführt ist. In diesem Fall liegen die plattenförmigen Einrichtungen 64 nicht auf der Stützplatte 28 auf und geben diese folglich in Radialrichtung frei, so dass die Stützplatte 28 bei Betätigung der ersten Antriebseinrichtung 40 in Richtung Öffnungsstellung angehoben werden kann, damit die Einsatzelemente 24, 26 aus den Inspektionsöffnungen 18, 20 heraustreten können und die Inspektionsöffnungen zur Durchführung einer Inspektion freigeben können.

Diese Stellung ist auch in Fig. 4b in Draufsicht zu erkennen.

In der in den Figuren 4a und 6a dargestellten Schließstellung, werden die plattenförmigen Einrichtungen 64 durch Kontraktion der zweiten Antriebseinrichtung 44 aufeinander zu bewegt. Wenn sich die Stützplatte 28 auf dem Gehäusemantel 10 in Schließstellung befindet, können sich die plattenförmigen Einrichtungen 64 an ihrem radial inneren Ende auf der Stützplatte 28 ablegen, wodurch diese in Radialrichtung abgestützt ist. Durch die starre radiale Abstützung der Stützplatte 28 können keine während des Fräsbetriebs auftretenden Stöße auf die Einsatzelemente 24, 26 auf die Antriebseinrichtungen 40, 44 übertragen werden, da die Antriebseinrichtungen 40, 44 keinerlei Kräfte aufnehmen müssen und die Stützplatte 28 formschlüssig mit dem Walzengehäuse 1 verriegelt ist oder am Walzengehäuse 1 verriegelt ist.

## Patentansprüche

1. Walzengehäuse (1) für eine mit Werkzeugen (4) versehene, um eine Walzenachse (6) rotierende Arbeitswalze (8) einer Baumaschine (2) oder Abbaumaschine, mit einem Gehäusemantel (10), der die Arbeitswalze (8) umfangsmäßig zumindest teilweise umgibt, und mit mindestens einer Überwachungseinrichtung (14,16), die den Zustand der Arbeitswalze (8) oder deren Werkzeuge (4) inspiziert, wobei jede Überwachungseinrichtung (14,16) mindestens eine Sensoreinrichtung (14) und der Gehäusemantel (10) mindestens eine Inspektionsöffnung (18,20) für die Sensoreinrichtung (14) aufweist,
**dadurch gekennzeichnet,**
**dass** auf der Außenseite des Gehäusemantels (10) eine Schließeinrichtung (22) angeordnet ist, mit der die mindestens eine Inspektionsöffnung (18,20) verschließbar ist.

2. Walzengehäuse (1) nach Anspruch 1, **dadurch gekennzeichnet, dass** sich die mindestens eine Inspektionsöffnung (18,20) in dem Gehäusemantel (10) in Längsrichtung der Arbeitswalze (8) erstreckt.

3. Walzengehäuse (1) nach Anspruch 1 oder 2, **dadurch gekennzeichnet, dass** die mindestens eine Inspektionsöffnung (18,20) sich radial in Richtung auf die Arbeitswalze (8) verjüngt.

4. Walzengehäuse (1) nach einem der Ansprüche 1 bis 3, **dadurch gekennzeichnet, dass** die Überwachungseinrichtung (14,16) mindestens eine Sensoreinrichtung (14) und mindestens eine Beleuchtungseinrichtung (16) aufweist und dass die mindestens eine Inspektionsöffnung mindestens eine erste Öffnung (18) für die Sensoreinrichtung (14) und mindestens eine zweite Öffnung (20) für die Beleuchtungseinrichtung (16) aufweist.

5. Walzengehäuse (1) nach einem der Ansprüche 1 bis 4, **dadurch gekennzeichnet, dass** die Schließeinrichtung (22) jeweils ein der Inspektionsöffnung (18,20) komplementär angepasstes Einsatzelement (24,26) aufweist, das zum Schließen der Inspektionsöffnung (18,20) in die Inspektionsöffnung (18,20) eingreift.

6. Walzengehäuse (1) nach Anspruch 5, **dadurch gekennzeichnet, dass** ein oder mehrere Einsatzelemente (24,26) auf einer Stützplatte (28) oder alle Einsatzelemente (24,26) auf einer gemeinsamen Stützplatte (28) angeordnet sind, wobei die mindestens eine Stützplatte (28) zum Öffnen oder Verschließen der mindestens einen Inspektionsöffnung (18,20) in eine Öffnungsstellung oder in eine Schließstellung versetzbar ist.

7. Walzengehäuse (1) nach Anspruch 6, **dadurch gekennzeichnet, dass** die Stützplatte (28) mindestens eine Durchlassöffnung (32) aufweist, die in der Öffnungsstellung der Schließeinrichtung (22) den Durchgang von Licht- und/oder Messstrahlen (15) der Überwachungseinrichtung (14,16) durch die mindestens eine Durchlassöffnung (32) der Stützplatte (28) und die mindestens eine Inspektionsöffnung (18,20) im Gehäusemantel (10) zulässt.

8. Walzengehäuse (1) nach einem der Ansprüche 5 bis 7, **dadurch gekennzeichnet, dass** das mindestens eine Einsatzelement (24,26) in der Schließstellung der Schließeinrichtung (22) radial nach außen verriegelt ist.

9. Walzengehäuse (1) nach einem der Ansprüche 6 bis 8, **dadurch gekennzeichnet, dass** die Schließeinrichtung (22) eine Verriegelungseinrichtung (36) aufweist, und dass die mindestens eine Stützplatte (28) mit dem mindestens einen Einsatzelement (24, 26) in der Schließstellung der Schließeinrichtung (22) in Radialrichtung mit der Verriegelungseinrichtung (36) verriegelbar ist.

10. Walzengehäuse (1) nach einem der Ansprüche 5 bis 9, **dadurch gekennzeichnet, dass** die Schließeinrichtung (22) eine erste Antriebseinrichtung (40) aufweist, wobei die erste Antriebseinrichtung (40) das mindestens eine Einsatzelement (24,26) zwischen der Schließ- und Öffnungsstellung auf der Außenseite des Gehäusemantels (10) bewegt.

11. Walzengehäuse (1) nach Anspruch 10, **dadurch gekennzeichnet, dass** die erste Antriebseinrichtung (40) bei Bewegung in Schließrichtung das von der Stützplatte (28) getragene mindestens eine Einsatzelement (24,26) mit Hilfe mindestens eines an dem Gehäusemantel (10) befestigten keilförmigen Anschlags (58) und einer vorzugsweise der Keilform der Anschläge (58) angepassten Stirnkante (60) am in Bewegungsrichtung vorderen Ende der Stützplatte (28) in die mindestens eine Inspektionsöffnung (18,20) drückt.

12. Walzengehäuse (1) nach einem der Ansprüche 10 oder 11, **dadurch gekennzeichnet, dass** das mindestens eine Einsatzelement (24,26) und die zugehörige Inspektionsöffnung (18,20) derart aneinander angepasste, geneigte Flanken (21,23) aufweisen, dass die erste Antriebseinrichtung (40) bei Bewegung in Öffnungsrichtung das mindestens eine Einsatzelement (24,26) aus der mindestens einen Inspektionsöffnung (18,20) herausbewegt.

13. Walzengehäuse (1) nach einem der Ansprüche 1 bis 12, **dadurch gekennzeichnet, dass** mehrere Inspektionsöffnungen (18,20) und zugehörige Schließeinrichtungen (22) über die Breite der Arbeitswalze (8) nebeneinander angeordnet sind.

14. Walzengehäuse (1) nach einem der Ansprüche 9 bis 13, **dadurch gekennzeichnet, dass** die Verriegelungseinrichtung (36) mindestens eine sich am Walzengehäuse (1) abstützende Einrichtung (64,66) aufweist, die in der Schließstellung der Schließeinrichtung (22) die mindestens eine Stützplatte (28) in deren Schließstellung formschlüssig radial nach außen abstützt und zum Bewegen der Schließeinrichtung (22) in die Öffnungsstellung die mindestens eine Stützplatte (28) zum Verschieben freigibt.

15. Baumaschine, insbesondere Straßenbaumaschine oder Recycler oder Stabilisierer oder Abbaumaschine, insbesondere Surface Miner, mit einer aus einer Fräswalze bestehenden Arbeitswalze (8) und einem Walzengehäuse (1) nach einem der Ansprüche 1 bis 14.

16. Verfahren zum Überwachen des Zustandes einer Arbeitswalze (8) einer Baumaschine (2) oder Abbaumaschine oder deren auf dem Umfang der Arbeitswalze (8) angeordneten Werkzeuge (4) durch Messen des Zustandes der Arbeitswalze (8) oder deren Werkzeuge (4) mit einer Überwachungseinrichtung (14,16) durch mindestens eine Inspektionsöffnung (18,20) in einem die Arbeitswalze (8) umfangsmäßig zumindest teilweise umgebenden Gehäusemantel (10) eines Walzengehäuses (1) hindurch,
**gekennzeichnet durch**
das Verschließen der mindestens einen Inspektionsöffnung (18,20) während des Arbeitsbetriebes der Arbeitswalze (8) und das Öffnen der Inspektionsöffnung (18,20) während der Dauer der Zustandsmessung bei einer Unterbrechung des Arbeitsbetriebes, in der die Arbeitswalze (8) nicht im Eingriff mit einer zu bearbeitenden Fläche ist, wobei die mindestens eine Inspektionsöffnung (18,20) im Schließzustand mit mindestens einem zu der jeweiligen Inspektionsöffnung (18,20) komplementären Einsatzelement (24,26) verschlossen wird, das formschlüssig in der Schließstellung verriegelt wird.

## Claims

1. Drum housing (1) for a working drum (8) of a construction machine (2) or mining machine, said working drum being provided with tools (4) and rotating about a drum axis (6), with a housing shell (10) which at least partially encloses the circumference of the working drum (8), and with at least one a monitoring device (14, 16) for inspecting the condition of the working drum (8) or the tools (4) thereof, each monitoring device (14, 16) comprising at least one sensor device (14) and the housing shell (10) comprising at least one inspection opening (18, 20) for the sensor device (14).
**characterized in that**
a closing mechanism (22) is arranged on the outside of the housing shell (10), said closing mechanism enabling closure of the at least one inspection opening (18, 20).

2. Drum housing (1) in accordance with claim 1, **characterized in that** the at least one inspection opening (18, 20) in the housing shell (10) extends in longitudinal direction of the working drum (8).

3. Drum housing (1) in accordance with claim 1 or 2, **characterized in that** the at least one inspection opening (18, 20) tapers radially towards the working drum (8).

4. Drum housing (1) in accordance with one of the claims 1 to 3, **characterized in that** the monitoring device (14, 16) comprises at least one sensor device (14) and at least one illuminating device (16) and that the at least one inspection opening comprises at least one first opening (18) for the sensor device (14) and at least one second opening (20) for the illuminating device (16).

5. Drum housing (1) in accordance with one of the claims 1 to 4, **characterized in that** the closing mechanism (22) comprises a respective insert element (24, 26) adapted to the inspection opening (18, 20) in a complementary fashion, said insert element (24, 26) engaging with the inspection opening (18, 20) to close the inspection opening (18, 20).

6. Drum housing (1) in accordance with claim 5, **characterized in that** one or several insert elements (24, 26) are arranged on a support plate (28), or all insert elements (24, 26) are arranged on a joint support plate (28), wherein the at least one support plate (28) is relocatable into an opened position or into a closed position for the purpose of opening or closing the at least one inspection opening (18, 20).

7. Drum housing (1) in accordance with claim 6, **characterized in that** the support plate (28) comprises at least one passage opening (32) which allows, in the opened position of the closing mechanism (22), the passage of light beams and/or measuring beams (15) of the monitoring device (14, 16) through the at least one passage opening (32) of the support plate (28) and the at least one inspection opening (18, 20) in the housing shell (10).

8. Drum housing (1) in accordance with one of the claims 5 to 7, **characterized in that** the at least one insert element (24, 26) is locked radially outwards in the closed position of the closing mechanism (22).

9. Drum housing (1) in accordance with one of the claims 6 to 8, **characterized in that** the closing mechanism (22) comprises a locking mechanism (36) and that the at least one support plate (28) with the at least one insert element (24, 26) is lockable, in the closed position of the closing mechanism (22), in radial direction by means of the locking mechanism (36).

10. Drum housing (1) in accordance with one of the claims 5 to 9, **characterized in that** the closing mechanism (22) comprises a first drive mechanism (40), wherein the first drive mechanism (40) moves the at least one insert element (24, 26) between the closed position and opened position on the outside of the housing shell (10).

11. Drum housing (1) in accordance with claim 10, **characterized in that** the first drive mechanism (40), when moved in closing direction, pushes the at least one insert element (24, 26), which is supported by the support plate (28), into the at least one inspection opening (18, 20) by means of at least one wedge-shaped limit stop (58) mounted on the housing shell (10) and one leading edge (60) at the front end of the support plate (28) when seen in the direction of movement, said leading edge (60) being preferably adapted to the wedged shape of the limit stops (58).

12. Drum housing (1) in accordance with one of the claims 10 or 11, **characterized in that** the at least one insert element (24, 26) and the corresponding inspection opening (18, 20) comprise slanted sides (21, 23) adapted to one another in such a fashion that the first drive mechanism (40), when moved in opening direction, moves the at least one insert element (24, 26) out of the at least one inspection opening (18, 20).

13. Drum housing (1) in accordance with one of the claims 1 to 12, **characterized in that** several inspection openings (18, 20) and corresponding closing mechanisms (22) are arranged next to one another across the width of the working drum (8).

14. Drum housing (1) in accordance with one of the claims 9 to 13, **characterized in that** the locking mechanism (36) comprises at least one device (64, 66) supported at the drum housing (1) which, in the closed position of the closing mechanism (22), supports the at least one support plate (28), in the closed position of the latter, in a positive-fitting fashion radially outwards and, for the purpose of moving the closing mechanism (22) into the opened position, releases the at least one support plate (28) for shifting.

15. Construction machine, in particular road construction machine or recycler or stabilizer or mining machine, in particular surface miner, with a working drum (8) consisting of a milling drum and a drum housing (1) in accordance with one of the claims 1 to 14.

16. Method for monitoring the condition of a working drum (8) of a construction machine (2) or mining machine or of the tools (4) thereof arranged on the circumference of the working drum (8) by measuring the condition of the working drum (8) or the tools (4) thereof by means of a monitoring device (14, 16) through at least one inspection opening (18, 20) in a housing shell (10) of a drum housing (1), said housing shell (10) at least partially enclosing the circumference of the working drum (8),
**characterized by**
closing the at least one inspection opening (18, 20) during the working operation of the working drum (8) and opening the inspection opening (18, 20) for the duration of the condition measurement, with an interruption of the working operation in which the working drum (8) is not engaged with a surface to be worked, wherein the at least one inspection opening (18, 20), in closed condition, is closed with at least one insert element (24, 26) complementary to the corresponding inspection opening (18, 20), said insert element (24, 26) being locked in the closed position in a positive-fitting fashion.

## Revendications

1. Caisson de cylindre (1) pour un cylindre de travail (8) d'une machine de construction (2) ou d'une machine d'abattage, ce cylindre étant muni d'outils (4) et tournant autour d'un axe de cylindre (6), le caisson comprenant une enveloppe de caisson (10) qui entoure au moins partiellement le cylindre de travail (8) sur la périphérie, et au moins un dispositif de surveillance (14, 16) qui inspecte l'état du cylindre de travail (8) ou de ses outils (4), chaque dispositif de surveillance (14, 16) présentant au moins un dispositif capteur (14), et l'enveloppe de caisson (10) présentant au moins une ouverture d'inspection (18, 20) pour le dispositif capteur (14),
**caractérisé en ce que**,
un dispositif de fermeture (22) permettant de fermer l'au moins une ouverture d'inspection (18, 20) est disposée sur le côté extérieur de l'enveloppe de caisson (10).

2. Caisson de cylindre (1) selon la revendication 1, **caractérisé en ce que** l'au moins une ouverture d'inspection (18, 20) s'étend, dans l'enveloppe de caisson (10), dans la direction longitudinale du cylindre de travail (8).

3. Caisson de cylindre (1) selon la revendication 1 ou 2, **caractérisé en ce que** l'au moins une ouverture d'inspection (18, 20) se rétrécit radialement en direction du cylindre de travail (8).

4. Caisson de cylindre (1) selon une des revendications 1 à 3, **caractérisé en ce que** le dispositif de surveillance (14, 16) présente au moins un dispositif capteur (14) et au moins un dispositif d'éclairage (16), et **en ce que** l'au moins une ouverture d'inspection présente au moins une première ouverture (18) pour le dispositif capteur (14) et au moins une deuxième ouverture (20) pour le dispositif d'éclairage (16).

5. Caisson de cylindre (1) selon une des revendications 1 à 4, **caractérisé en ce que** le dispositif de fermeture (22) présente respectivement un élément d'insert (24, 26) qui est adapté de façon complémentaire à l'ouverture d'inspection (18, 20) et qui s'engage dans l'ouverture d'inspection (18, 20) pour la fermeture de l'ouverture d'inspection (18, 20).

6. Caisson de cylindre (1) selon la revendication 5, **caractérisé en ce qu'**un ou plusieurs éléments d'insert (24, 26) sont disposés sur une plaque d'appui (28) ou **en ce que** tous les éléments d'insert (24, 26) sont disposés sur une plaque d'appui (28) commune, l' au moins une plaque d'appui (28) pouvant être déplacée dans une position d'ouverture ou dans une position de fermeture pour l'ouverture ou la fermeture de l'au moins une ouverture d'inspection (18, 20).

7. Caisson de cylindre (1) selon la revendication 6, **caractérisé en ce que** la plaque d'appui (28) présente au moins une ouverture de passage (32) qui, dans la position d'ouverture du dispositif de fermeture (22), permet le passage de rayons de lumière et/ou de mesure (15) du dispositif de surveillance (14, 16) à travers l'au moins une ouverture de passage (32) de la plaque d'appui (28) et à travers l'au moins une ouverture d'inspection (18, 20) dans l'enveloppe de caisson (10).

8. Caisson de cylindre (1) selon une des revendications 5 à 7, **caractérisé en ce que** l'au moins un élément d'insert (24, 26) est, dans la position de fermeture du dispositif de fermeture (22), verrouillé radialement vers l'extérieur.

9. Caisson de cylindre (1) selon une des revendications 6 à 8, **caractérisé en ce que** le dispositif de fermeture (22) présente un dispositif de verrouillage (36), et **en ce que** l'au moins une plaque d'appui (28) avec l'au moins un élément d'insert (24, 26) peut, dans la position de fermeture du dispositif de fermeture (22), être verrouillée dans la direction radiale avec le dispositif de verrouillage (36).

10. Caisson de cylindre (1) selon une des revendications 5 à 9, **caractérisé en ce que** le dispositif de fermeture (22) présente un premier dispositif d'entraînement (40), qui déplace l'au moins un élément d'insert (24, 26) entre la position de fermeture et la position d'ouverture sur le côté extérieur de l'enveloppe de caisson (10).

11. Caisson de cylindre (1) selon la revendication 10, **caractérisé en ce que**, lors du déplacement dans la direction de fermeture, le premier dispositif d'entraînement (40) presse dans l'au moins une ouverture d'inspection (18, 20) l'au moins une élément d'insert (24, 26) porté par la plaque d'appui (28), à l'aide d'au moins une butée (58) en forme de coin fixée sur l'enveloppe de caisson (10) et d'un bord frontal (60) adapté de préférence à la forme en coin des butées (58), le bord frontal (60) se trouvant à l'extrémité avant, relativement au sens du déplacement, de la plaque d'appui (28).

12. Caisson de cylindre (1) selon la revendication 10 ou 11, **caractérisé en ce que** l'au moins un élément d'insert (24, 26) et l'ouverture d'inspection (18, 20) correspondante présentent des flancs (21, 23) inclinés adaptés l'un à l'autre de telle sorte que le premier dispositif d'entraînement (40), lors du déplacement dans la direction d'ouverture, fait sortir l' au moins un élément d'insert (24, 26) hors de l'au moins une ouverture d'inspection (18, 20).

13. Caisson de cylindre (1) selon une des revendications 1 à 12, **caractérisé en ce que** plusieurs ouvertures d'inspection (18, 20) et dispositifs de fermeture (22) correspondants sont disposés de façon juxtaposée sur la largeur du cylindre de travail (8).

14. Caisson de cylindre (1) selon une des revendications 9 à 13, **caractérisé en ce que** le dispositif de verrouillage (36) présente au moins un dispositif (64, 66) qui s'appuie sur le caisson de cylindre (1) et qui, dans la position de fermeture du dispositif de fermeture (22), supporte radialement vers l'extérieur, par liaison de forme, l' au moins une plaque d'appui (28) dans sa position de fermeture et libère pour le coulissement l'au moins une plaque d'appui (28) pour le déplacement du dispositif de fermeture (22) dans la position d'ouverture.

15. Machine de construction, en particulier machine de construction de routes ou recycler ou stabilisateur ou machine d'abattage, en particulier surface miner, avec un cylindre de travail (8) composé d'un cylindre de fraisage et avec un caisson de cylindre (1) selon une des revendications 1 à 14.

16. Procédé pour surveiller l'état d'un cylindre de travail (8) d'une machine de construction (2) ou d'une machine d'abattage ou de ses outils (4) disposés sur la périphérie du cylindre de travail (8), par la mesure de l'état du cylindre de travail (8) ou de ses outils (4), avec un dispositif de surveillance (14, 16) à travers au moins une ouverture d'inspection (18, 20) dans une enveloppe de caisson (10) d'un caisson de cylindre (1) entourant au moins partiellement le cylindre de travail (8) sur sa périphérie,
**caractérisé par**
la fermeture de l'au moins une ouverture d'inspection (18, 20) pendant le mode de travail du cylindre de travail (8) et par l'ouverture de l'ouverture d'inspection (18, 20) pendant la durée de la mesure d'état lors d'une interruption du mode de travail pendant laquelle le cylindre de travail (8) n'est pas en prise avec une surface à traiter, l'au moins une ouverture d'inspection (18, 20) étant, dans l'état de fermeture, fermée par au moins un élément d'insert (24, 26) qui est complémentaire à l'ouverture d'inspection (18, 20) respective et qui est verrouillé par liaison de forme dans la position de fermeture.
